# EUROPÄISCHE PATENTSCHRIFT

(11) **EP 0 698 179 B1**
(45) Veröffentlichungstag und Bekanntmachung des Hinweises auf die Patenterteilung: **29.12.1997**
(21) Anmeldenummer: 95910508.1
(22) Anmeldetag: 22.02.1995
(51) Int. Cl.: F01N 3/28, F01N 3/02

(54) **VORRICHTUNG ZUR ABGASREINIGUNG BEI BRENNKRAFTMASCHINEN**
EXHAUST FUME CLEANING DEVICE FOR INTERNAL COMBUSTION ENGINES
DISPOSITIF D'EPURATION DES GAZ D'ECHAPPEMENT DE MOTEURS A COMBUSTION INTERNE

(30) Priorität: 10.03.1994 DE 4408130
(43) Veröffentlichungstag der Anmeldung: 28.02.1996
(73) Patentinhaber: Bayerische Motoren Werke Aktiengesellschaft, 80788 München (DE); ZEUNA-STÄRKER GMBH & CO KG, D-86154 Augsburg (DE)
(72) Erfinder: BLÖDEL-PAWLIK, Jürgen, D-86368 Gersthofen (DE); FLIERL, Rudolf, D-81669 München (DE); FANESE, Wolfgang, D-81243 München (DE); SANTIAGO, Enrique, D-86420 Diedorf (DE); GRESCHER, Bernhard, D-86850 Fischach (DE); KRIEGER, Ernst, D-86551 Aichach (DE)
(86) Internationale Anmeldenummer: EP9500636
(87) Internationale Veröffentlichungsnummer: WO9524546

(56) Entgegenhaltungen:
- EP-A- 0 420 462
- DE-A- 2 311 475
- US-A- 3 929 419

## Beschreibung

Die Erfindung geht gemäß dem Oberbegriff des Patentanspruches 1 von der DE-A 2 311 475 aus.

Bei dieser bekannten Vorrichtung ist der als Reinigungs-Einsatz dienende Katalysator-Trägerkörper an einer Stirnseite schräg angeströmt, wobei zur optimalen Anströmung die gesamte Stirnseite im Anschlußquerschnitt der schräg gerichteten Zuströmleitung liegt. Zur Anordnung der schrägen Zuströmleitung an einer Stirnseite des Gehäuses weist die Zuströmleitung zumindest bereichsweise quer zum Gehäusemantel gerichtete Randbereiche des Anschlußquerschnittes auf. Eine dauerhafte Verbindung dieser die Mantel stirnseiten zum Teil querenden Randbereiche mit dem Mantel des Gehäuses ist aufwendig.

Der Erfindung liegt die Aufgabe zugrunde, die Verbindung einer Abgas-Zuströmleitung mit dem einen Reinigungs-Einsatz aufnehmenden Gehäuse unter Beachtung einer großflächigen Schräganströmung der Stirnseite des Trägerkörpers einfacher zu gestalten.

Diese Aufgabe ist gemäß dem Patentanspruch 1 dadurch gelöst, daß die Zuströmleitung einen den Einsatz stromab seiner Stirnseite umgrenzenden, einer Verbindung mit dem Gehäuse dienenden Abschnitt aufweist.

Mit der erfindungsgemäßen Anordnung eines Gehäuseabschnittes an der Abgas-Zuströmleitung ist bei optimaler Schräganströmung des Reinigungs-Einsatzes in vorteilhafter Weise eine vereinfachte Verbindung der beiden Bauteile geschaffen.

Fertigungstechnisch vereinfacht sich die Verbindung in Ausgestaltung der Erfindung dadurch, daß der Verbindungs-Abschnitt der Zuströmleitung unter bereichsweiser Fortlassung einer nachgiebigen Zwischenlage den Einsatz mit Spiel umgrenzend gestaltet ist. Dieser freie Außenumfangsabschnitt des Einsatzes kann dazu dienen, daß ein beim Betrieb der Brennkraftmaschine rückstandsfrei verbrennender Kunststoff-Ring vorteilhaft bei der Montage die Zentrierung des Verbindungs-Abschnittes unterstützt und dabei ggf. auch dem Schutz der Stirnkante des Einsatzes dient.

Im Hinblick auf eine vorteilhaft automatengerechte Gestaltung wird in weiterer Ausgestaltung vorgeschlagen, daß der Verbindungs-Abschnitt der Zuströmleitung einen quer zur anschlußseitigen Stirnseite des Gehäuses gerichteten Verbindungsflansch aufweist. Dadurch können mit geringem Materialaufwand ausgeführte, dichte Kehlnähte für eine werkstoffschlüssige Verbindung zur Anwendung kommen. Ein entsprechend gewählter Radius zwischen Verbindungs-Abschnitt und Verbindungsflansch kann das vorerwähnte Zentrieren vorteilhaft erleichtern.

Mit dem weiteren erfindungsgemäßen Vorschlag, den den Verbindungs-Abschnitt aufweisenden Anschlußteil der Zuströmleitung als einen gesonderten Trichter zu gestalten, ergibt sich der Vorteil, den Verbindungs-Abschnitt als maßhaltigen Gehäuseabschnitt ausformen zu können.

Bei einer anderen Verbindungsgestaltung weist der Verbindungs-Abschnitt der Zuströmleitung bzw. des Trichters im gehäuseseitigen Endabschnitt einen an der Außenkontur des Gehäuses zentrierbaren Flansch auf.

Zur Erzielung einer großflächigen Schräganströmung des Einsatzes wird schließlich vorgeschlagen, daß ein Rohr-Endabschnitt der Zuströmleitung in einer Öffnung des Trichters derart eingeführt angeordnet ist, daß mit dem der Stirnseite des Einsatzes nächst benachbarten Rohr-Endabschnitt auch eine Beaufschlagung im äußersten Randbereich der Einsatz-Stirnseite gesichert ist.

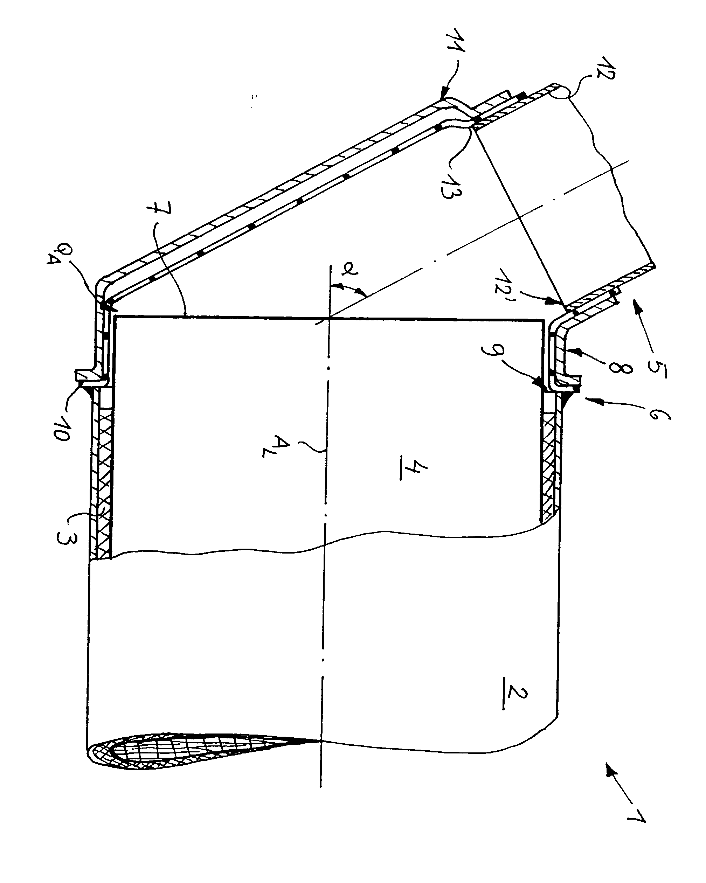

Die Erfindung ist anhand einer in der Zeichnung abschnittsweise gezeigten Vorrichtung zur Abgasreinigung bei einer Brennkraftmaschine beschrieben.

Eine Vorrichtung 1 zur Abgasreinigung umfaßt einen in einem Gehäuse 2 über eine nachgiebige Zwischenlage 3 angeordneten, z.B. als Monolithen gestalteten Reinigungs-Einsatz 4 sowie eine an einem Ende des Gehäuses 2 unter einem Winkel α zur Längsachse (A_{L}) des Einsatzes 4 angeordnete Abgas-Zuströmleitung 5. Der Winkel ist kleiner als 90°C. Die Zuströmleitung 5 weist im Gehäuse-Anschlußbereich 6 einen der zuströmseitigen Stirnseite 7 des Einsatzes 4 entsprechenden Querschnitt (Q_{A}) auf.

Zur Erzielung einer einfachen Verbindung der Zuströmleitung 5 mit dem Gehäuse 2 weist die Zuströmleitung 5 einen den Einsatz 4 stromab seiner Stirnseite 7 umgrenzenden, einer Verbindung mit dem Gehäuse 2 dienenden Abschnitt 8 auf. Der im wesentlichen entsprechend der Kontur des angrenzenden Gehäuses 2 gestaltete Verbindungs-Abschnitt 8 umgrenzt den Einsatz 4 unter bereichsweiser Fortlassung der nachgiebigen Zwischenlage 3 mit Spiel. Dieses Spiel ist so gewählt, daß ein Anschlagen des Einsatzes 4 im Betrieb gegen den Verbindungs-Abschnitt 8 vermieden ist. Weiter kann in diesem von der Zwischenlage 3 freien Außenumfangsbereich des Einsatzes 4 vor der Montage des Verbindungs-Abschnittes 8 ein dessen Zentrierung dienender Kunststoff-Ring (nicht gezeigt) vorgesehen sein, der beim Betrieb der Brennkraftmaschine rückstandsfrei verbrennt. Im übrigen ist mit diesem Spiel in vorteilhafter Weise ein Schutz der elastischen Zwischenlage 3 erreicht, was insbesondere bei einer als Blähmatte ausgebildeten Zwischenlage 3 von besonderem Vorteil ist.

Zur Erzielung einer einfachen Verbindung bei günstiger Handhabung für die Fertigung weist der Verbindungs-Abschnitt 8 der Zuströmleitung 5 einen quer zur anschlußseitigen Stirnseite 9 des Gehäuses 2 gerichteten Verbindungsflansch 10 auf. Dies ermöglicht bei geringem Materialaufwand eine dichte Kehlnaht zur werkstoffschlüssigen Verbindung der Bauteile 5 und 2. Ein entsprechender Übergang zum Verbindungsflansch 10 erleichtert die vorerwähnte Zentrierung.

In einer bevorzugten Ausgestaltung ist der den Verbindungs-Abschnitt 8 aufweisende Anschlußteil der Zuströmleitung 5 als ein gesonderter Trichter 11 ausgeformt. Damit kann der Verbindungs-Abschnitt 8 als maßhaltiger Gehäuseabschnitt ausgeformt werden.

Um schließlich eine großflächige Schräganströmung für eine über den gesamten Querschnitt des Einsatzes 4 erzielte Abgasdurchströmung zu erreichen, ist ein Rohr-Endabschnitt 12 der Zuströmleitung 5 in einer Öffnung 13 des Trichters 11 derart eingeführt angeordnet, daß mit dem der Stirnseite 7 des Einsatzes 4 nächst benachbarten Rohr-Endabschnitt 12' auch eine Beaufschlagung im äußersten Randbereich der Einsatz-Stirnseite 7 gesichert ist.

Im Rahmen der Erfindung kann der Verbindungs-Abschnitt der Zuströmleitung bzw. des Trichters im gehäuseseitigen Endabschnitt auch einen an der Außenkontur des Gehäuses zentrierbaren Flansch aufweisen.

Der Einsatz 4 der Vorrichtung 1 dient der katalytischen und/oder thermischen Reinigung der Abgase eines Benzin- oder Dieselmotors.

## Patentansprüche

1. Vorrichtung zur Abgasreinigung bei Brennkraftmaschinen,
- umfassend einen in einem Gehäuse (2) über eine Zwischenlage (3) angeordneten Reinigungs-Einsatz (4), und
- eine an einem Ende des Gehäuses (2) unter einem Winkel (α) schräg zur Längsachse (A_{L}) des Einsatzes (4) angeordnete Abgas-Zuströmleitung (5), die
- im Gehäuse-Anschlußbereich (6) einen der zuströmseitigen Stirnseite (7) des Einsatzes (4) entsprechenden Querschnitt aufweist,
dadurch gekennzeichnet,
- daß die Zuströmleitung (5) einen als Gehäuseabschnitt den Einsatz (4) stromab der zuströmseitigen Stimseite (7) mit Spiel umgrenzend gestalteten Abschnitt (8) aufweist, der
- einer Verbindung mit dem stromab der Stimseite (7) des Einsatzes (4) endenden Gehäuse (2) dient.

2. Vorrichtung nach Anspruch 1, dadurch gekennzeichnet, daß der Verbindungs-Abschnitt (8) der Zuströmleitung (5) unter bereichsweiser Fortlassung einer nachgiebigen Zwischenlage (3) den Einsatz (4) mit Spiel umgrenzt.

3. Vorrichtung nach Anspruch 1 und 2, dadurch gekennzeichnet, daß der Verbindungs-Abschnitt (8) der Zuströmleitung (5) einen quer zur anschlußseitigen Stirnseite (9) des Gehäuses (2) gerichteten Verbindungsflansch (10) aufweist.

4. Vorrichtung nach den Ansprüchen 1 bis 3, dadurch gekennzeichnet, daß der den Verbindungs-Abschnitt (8) aufweisende Anschlußteil der Zuströmleitung (5) als ein gesonderter Trichter (11) ausgeformt ist.

5. Vorrichtung nach den Ansprüchen 1 bis 4, dadurch gekennzeichnet,
- daß ein Rohr-Endabschnitt (12) der Zuströmleitung (5) in einer Öffnung (13) des Trichters (11) derart eingeführt angeordnet ist,
- daß mit dem der Stirnseite (7) des Einsatzes (4) nächst benachbarten Rohr-Endabschnitt (12') auch eine Beaufschlagung im äußersten Randbereich der Einsatz-Stirnseite (7) gesichert ist.

6. Vorrichtung nach einem oder mehreren der Ansprüche 1 bis 5, dadurch gekennzeichnet, daß der Verbindungs-Abschnitt der Zuströmleitung bzw. des Trichters im gehäuseseitigen Endabschnitt einen an der Außenkontur des Gehäuses zentrierbaren Flansch aufweist.

## Claims

1. A device for emission control of internal combustion engines, comprising
- a cleaning module (4) arranged in a housing (2) above a spacer (3),
- an exhaust gas inflow line (5) arranged at one end of the housing (2) at an angle (α) obliquely to the longitudinal axis (A_{L}) of the module (4), which
- has a cross-section in the housing connecting region (6) which corresponds to the inflow-side end face (7) of the module (4)
characterised in that
- the inflow line (5) has a section (8), as a housing section, which delimits the module (4) downstream of the inflow-side end face (7) with play, which
- serves to connect with the housing (2) ending downstream of the end face (7) of the module (4).

2. A device according to claim 1, characterised in that the connecting section (8) of the inflow line (5) delimits the module (4) with play, with the resilient spacer (3) absent over part of the region.

3. A device according to claim 1 and claim 2, characterised in that the connecting section (8) of the inflow line (5) is provided with a connecting flange (10) aligned transversely to the connection-side end face (9) of the housing (2).

4. A device according to claims 1 to 3, characterised in that the connecting part of the inflow line (5) which bears the connecting section (8) is formed as a separate funnel (11).

5. A device according to claims 1 to 4, characterised in that
- a pipe end section (12) of the inflow line (5) is introduced into an opening (13) of the funnel (11) in such a manner
- that impingement is also ensured in the outermost border region of the module end face (7) through the pipe end section (12') closest to the end face (7) of the module (4).

6. A device according to one or more of claims 1 to 5, characterised in that the connecting section of the inflow line or the funnel has a flange, which can be centred on the outer contours of the housing, in the end section on the housing side.

## Revendications

1. Dispositif de purification des gaz d'échappement d'un moteur à combustion interne comprenant :
- une garniture de nettoyage (4) placée dans un boîtier (2) avec une couche intermédiaire (3), et
- une conduite d'alimentation en gaz d'échappement (5) prévue à l'extrémité du boîtier (2) et faisant un angle (α) pour arriver en biais par rapport à l'axe longitudinal (A_{L}) de la garniture (4) ;
cette conduite ayant, dans la zone de branchement (6) du boîtier, une section correspondant à la face frontale amont (7) de la garniture (4),
caractérisé en ce que
la conduite d'alimentation (5) comporte un segment (8) de forme enveloppante avec du jeu, servant de segment de boîtier entourant la garniture (4) en aval de la face frontale amont (7), ce segment servant de liaison avec le boîtier (2) qui se termine en aval de la face frontale (7) de la garniture (4).

2. Dispositif selon la revendication 1,
caractérisé en ce que
le segment de liaison (8) de la conduite d'alimentation (5) entoure avec du jeu la garniture (4) avec suppression par zone d'une couche intermédiaire souple (3).

3. Dispositif selon l'une quelconque des revendications 1 et 2,
caractérisé en ce que
le segment de liaison (8) de la conduite d'alimentation (5) présente une bride de liaison (10) dirigée transversalement à la face frontale (9) du côté du branchement du boîtier (2).

4. Dispositif selon l'une des revendications 1 à 3,
caractérisé en ce que
la partie de branchement de la conduite d'alimentation (5), qui correspond au segment de liaison (8), est en forme particulière d'entonnoir (11).

5. Dispositif selon l'une des revendications 1 à 4,
caractérisé en ce qu'
un segment d'extrémité tubulaire (12) de la conduite d'alimentation (5) est introduit dans une ouverture (13) de l'entonnoir (11) de façon que le segment d'extrémité tubulaire (12') le plus voisin de la face frontale (7) de la garniture (4) soit également sollicité dans la zone marginale la plus à l'extérieur de la face frontale (7) de la garniture.

6. Dispositif selon l'une ou plusieurs des revendications 1 à 5,
caractérisé en ce que
le segment de liaison de la conduite d'alimentation ou de l'entonnoir du segment d'extrémité du côté du boîtier présente une bride de centrage pour le contour extérieur du boîtier.
